# FASCICULE DE BREVET EUROPEEN

(11) **EP 2 569 667 B1**
(45) Date de publication et mention de la délivrance du brevet: **08.07.2015**
(21) Numéro de dépôt: 11724271.9
(22) Date de dépôt: 06.05.2011
(51) Int. Cl.: G02C 13/00, G02C 7/02

(54) **PROCÉDÉ DE PRÉPARATION D'UNE LENTILLE OPHTALMIQUE ÉQUIPÉE D'UNE MARQUE MÉMOIRE**
VERFAHREN ZUR HERSTELLUNG EINER KONTAKTLINSE MIT EINEM QR-CODE
METHOD FOR PREPARING AN OPHTHALMIC LENS PROVIDED WITH A QR CODE

(30) Priorité: 10.05.2010 FR 1001989
(43) Date de publication de la demande: 20.03.2013
(73) Titulaire: Essilor International (Compagnie Générale d'Optique), 94220 Charenton-le-Pont (FR)
(72) Inventeur: LEVRAUD, Loic, F-94220 Charenton-le-Pont (FR); LEGUY, Dominique, F-94220 Charenton-le-Pont (FR); LAZUKA-NICOULAUD, Eva, F-94220 Charenton-le-Pont (FR)
(74) Mandataire: Chauvin, Vincent
(86) Numéro de dépôt international: PCT/FR2011/000279
(87) Numéro de publication internationale: WO 2011/141643

(56) Documents cités:
- EP-A1- 0 285 490
- EP-A1- 1 363 151
- WO-A1-2006/064107
- WO-A2-2005/093495
- FR-A1- 2 626 086
- FR-A1- 2 650 679
- FR-A1- 2 900 246
- US-B1- 6 813 536

## Description

### DOMAINE TECHNIQUE AUQUEL SE RAPPORTE L'INVENTION

La présente invention concerne de manière générale la préparation d'une lentille ophtalmique en vue de son montage sur une monture de lunettes.

Elle concerne plus particulièrement un procédé de préparation d'une lentille ophtalmique et un appareil de centrage de cette lentille ophtalmique.

### ARRIÈRE-PLAN TECHNOLOGIQUE

La préparation d'une lentille ophtalmique en vue de son montage sur une monture de lunettes sélectionnée par un porteur se décompose en six opérations principales généralement mises en oeuvre pour moitié chez un fabricant de lentilles et pour moitié chez un opticien.

Les opérations mises en oeuvre par le fabricant de lentilles sont :
- le moulage de la lentille ophtalmique suivant une forme standard, de manière qu'elle présente une puissance optique proche de la puissance optique souhaitée,
- l'usinage précis de l'une des faces optiques de cette lentille ophtalmique de manière qu'elle présente une puissance optique égale à la puissance optique souhaitée, et
- le marquage de la lentille ophtalmique pour situer précisément les points particuliers et l'axe d'horizon de cette lentille.

Les opérations mises en oeuvre par l'opticien sont :
- l'acquisition du contour de l'un des cercles ou de l'une des lentilles de présentation de la monture de lunettes sélectionnée par le client (futur porteur de cette monture de lunettes),
- le centrage de la lentille qui consiste à positionner et à orienter convenablement ce contour sur la lentille, en fonction de la position des points particuliers et de l'orientation du trait d'horizon de la lentille, de manière qu'une fois assemblée, cette lentille se trouve centrée en vis-à-vis de la pupille de l'oeil correspondant du porteur, puis
- le détourage de la lentille qui consiste à la découper selon ce contour, de manière à ce qu'elle puisse mécaniquement et esthétiquement s'adapter à la forme de la monture sélectionnée, tout en exerçant au mieux la fonction optique pour laquelle elle a été conçue.

Parmi les diverses technologies permettant de faire apparaître les marques de centrage sur l'une des faces optiques de la lentille ophtalmique, le marques de centrage sur l'une des faces optiques de la lentille ophtalmique, le marquage à l'aide d'un tampon encré appliqué sur ladite face optique est couramment employé pour sa simplicité, son faible coût et sa précision.

Pour protéger la lentille et pour éviter que les marques de centrage ne s'effacent, la lentille ophtalmique est généralement stockée dans une pochette lors de son transfert depuis le fabricant de lentilles jusque chez l'opticien. Cette pochette est d'ordinaire équipée d'un autocollant sur lequel sont inscrits un identifiant et des données optiques relatives aux puissances optiques de la lentille.

Lors de la réception de cette lentille, l'opticien peut alors saisir ces informations sur son ordinateur, de manière à identifier la lentille reçue et à vérifier qu'elle correspond bien à la lentille commandée auprès du fabricant.

L'inconvénient principal de ce procédé est que la saisie de ces informations est longue, fastidieuse, et en outre source d'erreurs.

### OBJET DE L'INVENTION

Afin de remédier à l'inconvénient précité de l'état de la technique, la présente invention propose un procédé de préparation de lentilles ophtalmiques dans lequel la saisie des caractéristiques des lentilles est automatisée.

Plus particulièrement, on propose selon l'invention un procédé de préparation d'une lentille ophtalmique tel que défini dans la revendication 1.

La marque mémoire se présente ainsi sous la forme d'un code figuratif, directement visible et interprétable. Grâce à cette forme, l'information stockée sous un format numérique est lisible par tout type de moyen d'acquisition d'image (appareil photo numérique, caméra, ...) associé à un logiciel de décryptage ad hoc.

Cette information peut en particulier être lue par les moyens d'acquisition d'image des appareils de préparation de lentilles déjà existants (centreur, meuleuse, ...), pour autant que ce logiciel de décryptage soit implanté dans l'unité centrale de ces appareils, ce qui nécessite une mise à niveau de ces appareils qui est peu onéreuse. Il n'est donc nul besoin de prévoir d'élément matériel particulier pour capturer et pour traiter l'image brute de la face optique de la lentille ophtalmique.

Grâce à la position de la marque mémoire (sur la lentille), les informations stockées restent accessibles lors de l'ensemble des opérations de préparation de la lentille par l'opticien, quand bien même la pochette protectrice aurait été mise au rebut. Aucune erreur de rangement de la lentille dans une pochette impropre ou erreur de saisie des données inscrites sur la pochette ne risque en outre d'advenir.

Enfin, puisque ces informations demeurent accessibles durant l'ensemble des opérations de préparation de la lentille par l'opticien, aucun registre mémorisant ces informations pour les communiquer aux différents appareils de préparation de lentilles n'est nécessaire, au bénéfice de la simplicité de l'architecture du réseau informatique et du logiciel de préparation de lentilles de l'opticien.

Selon une caractéristique avantageuse de l'invention, ledit code est un code bidimensionnel stockant au moins quatre informations distinctes.

Jusqu'alors, l'autocollant porté par la pochette stockant la lentille ophtalmique ne comportait que les données essentielles de la lentille. Les données subsidiaires, qui permettent d'optimiser le centrage ou le détourage de la lentille, n'apparaissaient en revanche pas pour ne pas surcharger l'autocollant, si bien qu'elles n'étaient pas directement accessibles.

Ici, le code bidimensionnel utilisé permet au fabricant de stocker un grand nombre d'informations relatives aux caractéristiques de la lentille. Ces informations, qui sont alors facilement accessibles, peuvent à tout moment être lues et exploitées par l'opticien. Elles peuvent par exemple être lues et exploitées pour améliorer la précision du centrage et celle du détourage de la lentille.

D'autres caractéristiques avantageuses et non limitatives du procédé conforme à l'invention sont définies dans les revendications 2 à 12.

On propose également selon l'invention un appareil tel que défini dans la revendication 13.

Avantageusement, lesdits moyens de traitement d'images sont adaptés à repérer les positions desdites marques de centrage sur ladite lentille ophtalmique.

Préférentiellement alors, cet appareil est un appareil de centrage adapté à centrer ladite lentille ophtalmique en fonction des positions repérées de ses marques de centrage.

La forme de la marque mémoire permet en effet d'exploiter les moyens d'imagerie natifs de l'appareil de centrage pour lire les informations stockées dans cette marque mémoire. Peu onéreuse à mettre en oeuvre, cette lecture permet alors de faciliter les opérations de centrage. A titre d'illustration, cette lecture peut par exemple permettre d'acquérir la forme du motif des marques de centrage de la lentille, ce qui facilite ensuite la localisation de ces marques de centrage. Elle peut également permettre de vérifier la cohérence des informations mesurées par le centreur et celles stockées dans la marque mémoire, afin de contrôler que la lentille présente les caractéristiques optiques souhaitées. Elle peut aussi permettre de vérifier la cohérence des informations de commande de la lentille avec les informations stockées dans la marque mémoire, afin de contrôler que la lentille présente les caractéristiques optiques désirées.

### DESCRIPTION DÉTAILLÉE D'UN EXEMPLE DE RÉALISATION

La description qui va suivre, en regard des dessins annexés, donnée à titre d'exemple non limitatif, fera bien comprendre en quoi consiste l'invention et comment elle peut être réalisée.

Sur les dessins annexés :
- la figure 1 est un schéma illustratif du procédé de préparation d'une lentille ophtalmique selon l'invention,
- la figure 2 est une vue schématique en perspective d'un appareil centreur-bloqueur ;
- la figure 3 est une vue schématique en perspective d'un appareil de détourage ;
- la figure 4 est une vue de face d'une lentille ophtalmique selon l'invention ;
- la figure 5 est une vue en perspective d'un maillage de la lentille ophtalmique de la figure 4.

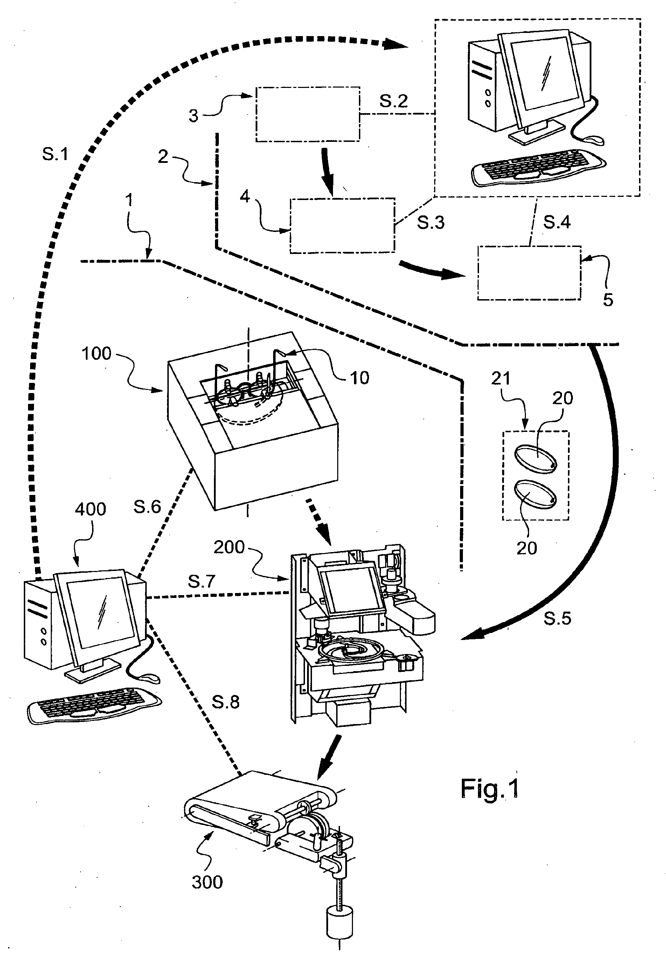

Sur la figure 1, on a représenté schématiquement les différentes opérations qui permettent de préparer un job 21 de lentilles 20 en vue de son montage sur une monture de lunettes 10 préalablement sélectionnée.

Ces opérations sont mises en oeuvre en partie chez un fabricant 2 de lentilles ophtalmiques, et en partie chez un opticien 1.

La première opération S.1 est mise en oeuvre par l'opticien. Elle consiste à déterminer les prescriptions optiques de puissances correctives et les besoins (lentilles unifocales ou progressives, transparentes ou colorées...) d'un client, et à communiquer ces informations au fabricant 2.

La seconde opération S.2 consiste, pour le fabricant 2, à mouler un job de deux lentilles ophtalmiques 20, en choisissant des moules standards 3 permettant d'obtenir des lentilles de formes (et de puissances optiques) proches des formes désirées.

La troisième opération S.3 consiste à usiner les faces arrières des lentilles ophtalmiques à l'aide d'un appareil d'usinage 4 adapté, de manière à obtenir des lentilles présentant les puissances optiques recherchées. Cette opération est éventuellement suivie d'une opération de traitement chimique de la lentille pour que sa surface présente un revêtement souhaité (hydrophobe, anti-rayure, anti-reflet, ...).

La quatrième opération S.4 consiste à marquer la lentille, par exemple à l'aide d'un tampon encreur 5, pour y inscrire des marques de centrage. Cette opération sera décrite plus en détail dans la suite de cet exposé.

La cinquième opération S.5 consiste, pour le fabricant 2, à envoyer ce job 21 de lentilles ophtalmiques 20 à l'opticien.

Dans son officine, l'opticien dispose d'appareils qui lui permettent, après réception des lentilles ophtalmiques non détourées, de préparer ces lentilles ophtalmiques afin de pouvoir les monter sur la monture de lunettes sélectionnée par le client. Parmi ces appareils, l'opticien dispose ici d'un appareil de lecture de contours 100, d'un appareil centreur-bloqueur 200, et d'un appareil de détourage 300 pilotés par une unité de pilotage 400.

L'appareil de lecture de contours 100 permet à l'opticien, au cours d'une sixième opération S.6, de relever la forme des contours 11 des cercles ou des lentilles de présentation de la monture de lunettes sélectionnée par le client.

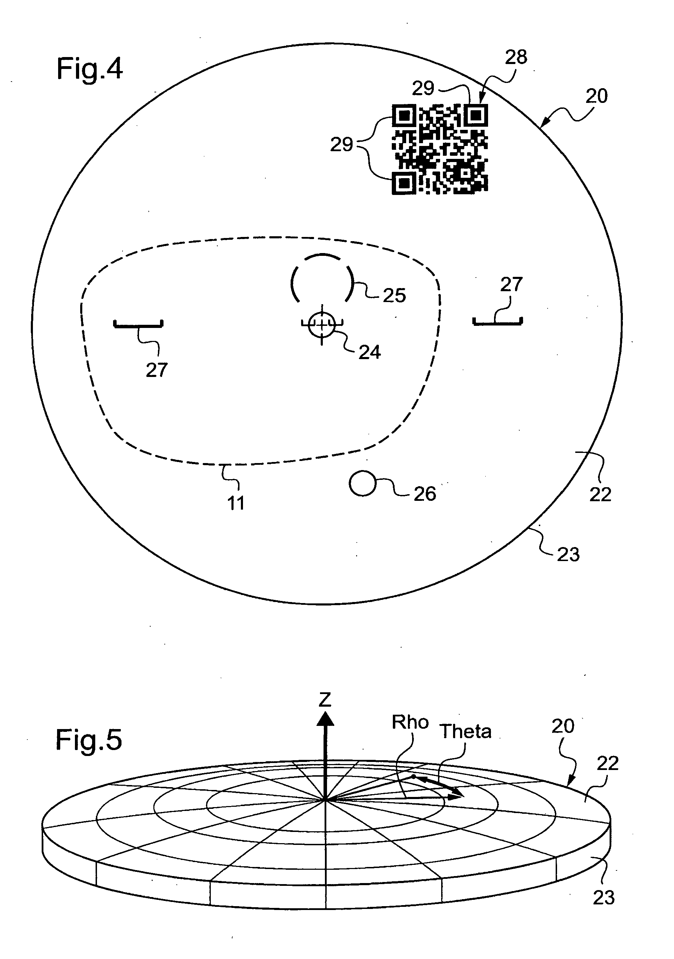

L'appareil centreur-bloqueur 200 permet quant à lui, au cours d'une septième opération S.7, de centrer les contours 11 sur les deux lentilles ophtalmiques 20 du job 21 (voir figure 4), de telle manière qu'une fois montées sur la monture, les lentilles soient correctement centrées en vis-à-vis des yeux du porteur (ou client) lorsque ce dernier regarde à l'infini.

L'appareil de détourage 300 permet quant à lui, au cours d'une huitième et dernière opération S.8, de détourer les deux lentilles ophtalmiques 20 en suivant ces contours 11.

### Appareil centreur-bloqueur

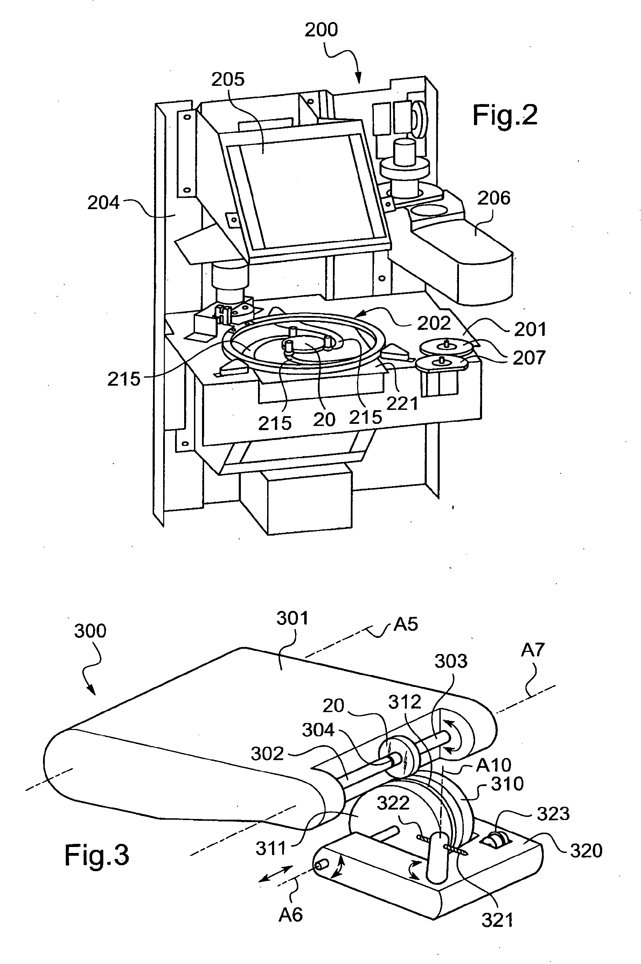

Sur la figure 2, on a représenté plus en détail l'appareil centreur-bloqueur 200.

Cet appareil est conçu pour, d'une part, relever les positions des marques de centrage de chaque lentille ophtalmique 20 à préparer, et, d'autre part, bloquer cette lentille ophtalmique 20 en déposant un accessoire de blocage sur sa face avant.

Cet appareil centreur-bloqueur 200 est bien connu de l'homme du métier et ne fait pas en propre l'objet de l'invention décrite. Son architecture et son fonctionnement sont par exemple décrits en détail dans le document de brevet EP 1 722 924.

Tel que représenté sur la figure 2, cet appareil comporte :
- un bâti 204 agencé pour délimiter un pupitre de travail 201 accessible à l'opticien,
- un mécanisme de maintien 202 de la lentille ophtalmique 20 en cours de préparation, comportant un jeu de trois mors 215 à serrage concentrique,
- des moyens de centrage optique de cette lentille ophtalmique 20,
- un écran de visualisation 205 fixé sur le bâti 204, et
- des moyens de blocage 206 de la lentille ophtalmique 20.

Les moyens de centrage comportent ici une plaque support 221 transparente disposée en dessous du mécanisme de maintien 202, des moyens d'éclairement de la lentille ophtalmique 20 disposés au-dessus du mécanisme de maintien 202, et des moyens d'acquisition et d'analyse de la lumière transmise par ladite lentille ophtalmique 20 au travers de la plaque support 221. Ces moyens d'acquisition et d'analyse comprennent ici une caméra numérique réglée de manière que la plaque support 221 se trouve dans son plan focal, de telle sorte que l'image de la plaque support soit nette. Ces moyens d'acquisition et d'analyse comprennent également des moyens de traitement d'images adaptés à traiter le signal obtenu en sortie de la caméra numérique et des moyens d'affichage du signal traité, constitués par l'écran de visualisation 205.

Ces moyens de centrage permettent en particulier d'acquérir une image de la lentille ophtalmique 20 et de ses marques de centrage, et d'en déduire la position du référentiel optique de la lentille ophtalmique 20.

Ces moyens de centrage sont également adaptés à mesurer les puissances de réfringence optique de la lentille. Ils sont à cet effet conçus pour afficher sous la lentille une image source et pour analyser la déformation qu'a subi cette image en passant au travers de la lentille.

Les moyens de blocage comportent quant à eux un bras de positionnement 206, préférentiellement automatisé, qui est relié au bâti 204. ce bras de positionnement 206 est adapté à prendre à l'aide d'une pince l'un des accessoires de blocage disposés sur l'un des réceptacles 207 prévu sur le bâti 204 pour venir le déposer en un emplacement déterminé sur la face avant de la lentille ophtalmique 20, fonction de la position acquise du référentiel optique de cette lentille.

L'accessoire de blocage forme ainsi un repère représentatif de la position du référentiel optique de la lentille ophtalmique acquis par les moyens de centrage optique. Il est destiné à être engagé dans un logement correspondant de l'appareil de détourage 300, de manière que ce dernier acquiert ainsi la position du référentiel optique de la lentille ophtalmique.

### Appareil de détourage

L'appareil de détourage est également bien connu de l'homme du métier et ne fait pas en propre l'objet de l'invention décrite. Il peut être réalisé sous la forme de toute machine de découpage ou d'enlèvement de matière apte à modifier le contour de la lentille ophtalmique 20 pour l'adapter à la forme de la monture sélectionnée.

Tel que représenté sur la figure 3, cet appareil est constitué par une meuleuse 300 automatique, communément dite numérique. Cette meuleuse comporte en l'espèce :
- une bascule 301 qui est commandée en rotation autour d'un axe de référence A5, en pratique un axe horizontal, sur un châssis non représenté, et qui supporte la lentille ophtalmique 20 à usiner ;
- un chariot porte-meules qui est commandé en rotation autour d'un axe de meule A6 parallèle à l'axe de référence A5, qui est commandé en translation suivant l'axe de meule A6, et qui porte des meules 310, 311 entraînées en rotation autour de cet axe A6 par un moteur non représenté ; et
- un module de finition 320 qui est commandé en pivotement autour de l'axe de meule A6 pour se rapprocher ou s'éloigner de la lentille ophtalmique 20, et qui embarque des moyens de finition de la lentille ophtalmique 20.

La bascule 301 est en particulier équipée de deux arbres de serrage et d'entraînement en rotation 302, 303 de la lentille ophtalmique 20 autour d'un axe de blocage A7 parallèle à l'axe A5. Un premier des deux arbres 302 est fixe en translation suivant l'axe de blocage A7. Le second des deux arbres 303 est au contraire mobile en translation suivant l'axe de blocage A7 pour réaliser le serrage en compression axiale de la lentille ophtalmique 20.

Le premier arbre 302 est équipé à son extrémité d'un accessoire de blocage 304 de la lentille inamovible. Le second arbre 303 est quant à lui équipé de moyens de réception de l'accessoire de blocage préalablement déposé par le bras 206 de l'appareil centreur-bloqueur 200 sur la lentille ophtalmique 20.

Le train de meules porté par le chariot porte-meules comporte une meule de détourage 310 cylindrique qui permet d'ébaucher la lentille ophtalmique 20 de manière à ramener son contour initialement circulaire à une forme proche de celle désirée. Il comporte en outre une meule de biseautage 311 pour former sur la tranche de la lentille ophtalmique 20 une nervure d'emboîtement en vue de son montage sur une monture de lunettes cerclée.

Le module de finition 320 porte quant à lui une meulette 323 commandé en rotation autour d'un axe parallèle à l'axe de blocage A7 pour rainer, chanfreiner et polir la lentille ophtalmique 20. Il porte également un plot qui comprend un outil de perçage 321 et un outil de fraisage 322 de la lentille ophtalmique 20, et qui est monté pivotant autour d'un axe A10 orthogonal à l'axe de blocage A7, pour sélectionner l'un ou l'autre de ces deux outils afin de fraiser ou percer la lentille.

### Lentille ophtalmique

Sur la figure 4, on a représenté une lentille ophtalmique 20, telle qu'elle se présente lorsqu'elle est envoyée par le fabricant de lentilles à l'opticien.

De manière classique, cette lentille ophtalmique 20 présente deux faces optiques, dont une face avant 22 convexe et une face arrière concave, et une tranche 23. Elle est formée d'un substrat sur lequel est déposé, par trempe ou évaporation chimique, un revêtement (ou traitement de surface).

Cette lentille ophtalmique présente des caractéristiques mécaniques, optiques et géométriques qui lui sont propres.

Parmi ses caractéristiques mécaniques, on définit en particulier :
- les caractéristiques mécaniques du substrat de la lentille,
- les caractéristiques mécaniques du revêtement de la lentille,
- la catégorie mécanique globale de lentille,
- la teinte de la lentille, et
- la polarisation de la lentille.

Les caractéristiques mécaniques du substrat de la lentille comportent ici le matériau de la lentille (verre minéral ou organique) et le module d'Young de la lentille.

Les caractéristiques mécaniques du revêtement de la lentille comportent quant à eux le type de traitement de surface (traitement hydrophobe mesurable par une énergie de surface de la lentille, anti-rayure, anti-reflet, ...) et la résistance aux fendillements du revêtement.

La catégorie mécanique globale de la lentille est une catégorie donnée par le fabricant de lentilles en fonction de la résistance mécanique globale de la lentille. Les différentes catégories sont ici fragile, intermédiaire et solide.

Parmi les caractéristiques optiques de la lentille, on définit en particulier :
- le type de la lentille (unifocale, bifocale, progressive),
- le pouvoir de correction optique de la lentille ophtalmique correctrice, c'est-à-dire ses propriétés de réfringence,
- l'indice de réfraction de la lentille,
- la forme des marques de centrage de la lentille, et
- la destination de la lentille, en position gauche ou droite sur la monture de lunettes.

Parmi les propriétés de réfringence, on définit tout d'abord la « puissance de réfringence sphérique » de la lentille pour un faisceau de rayons incident traversant cette lentille (également appelée puissance totale ou puissance réfringente ou puissance de focalisation ou puissance optique sphérique), comme la grandeur qui caractérise et quantifie le premier effet de réfringence sphérique (effet « loupe ») de la lentille sur le faisceau de rayons considéré : si elle est positive, la lentille a un effet convergent sur le faisceau de rayons ; si elle est négative, l'effet sur le faisceau de rayons est divergent. Le point de la lentille où l'effet loupe est nul (c'est-à-dire, dans le cas d'une lentille ayant une puissance optique exclusivement sphérique, le point où le rayon incident et le rayon transmis ont même axe) est appelé centre optique.

On définit par ailleurs la « puissance de réfringence cylindrique » de la lentille pour un rayon incident traversant cette lentille (également appelée puissance optique cylindrique) comme la grandeur qui caractérise et quantifie l'effet de réfringence cylindrique exercé par la lentille sur le rayon considéré, selon lequel il se forme non pas une seule mais deux aires focales, situées dans des plans différents, généralement perpendiculaires entre elles et appelées focales tangentielle et focale sagittale. Cette puissance cylindrique, également appelée « puissance d'astigmatisme » ou simplement « astigmatisme », correspond à la différence des puissances sphériques suivant les deux aires focales. Les deux aires sont repérées par un axe passant par leur « centre optique » communément appelé axe de cylindre.

On définit enfin la « puissance de réfringence prismatique » de la lentille pour un rayon incident traversant cette lentille (également appelée puissance optique prismatique) comme la grandeur qui caractérise et quantifie l'effet de réfringence prismatique, ou plus simplement de déviation, exercé par la lentille sur le rayon considéré. Cette puissance prismatique, également appelée « prisme », correspond à l'angle de déviation du rayon, c'est-à-dire l'angle formé entre les parties entrantes et sortantes du rayon. Le prisme se décompose en deux composantes : l'une horizontale, appelée prisme horizontal, correspondant à l'angle formé entre les projections des parties entrantes et sortantes du rayon dans le plan horizontal, l'autre verticale, appelée prisme vertical, correspondant à l'angle formé entre les projections des parties entrantes et sortantes du rayon dans le plan vertical.

On définit par ailleurs, pour une lentille bifocale ou progressive (c'est-à-dire à variation progressive de puissance), l'addition comme la grandeur qui caractérise et quantifie la différence de puissances de réfringence sphérique entre la zone de vision de près et la zone de vision de loin de la lentille, c'est-à-dire entre les deux zones de la lentille au travers lesquelles le porteur porte son regard lorsqu'il observe un objet proche (typiquement lorsqu'il lit un livre) ou éloigné (typiquement lorsqu'il observe un paysage).

S'agissant des marques de centrage de la lentille, on se référera ici aux marques de centrage provisoires de la lentille, appliqués sur la lentille par le fabricant pour situer les positions des points remarquables de cette lentille. On pourrait également se référer aux marques de centrage permanentes qui se présentent généralement sous la forme de micro-gravures. Les marques de centrage provisoires permettent en effet un repérage commode de la lentille préalablement à son montage sur une monture de lunettes, tandis que les marques de centrage permanentes permettent d'identifier la nature et les caractéristiques de la lentille ophtalmique après effacement des marques de centrage provisoires.

Ces marques de centrage provisoires forment ensemble un motif dont la forme n'est généralement commune qu'aux lentilles de la même marque, fabriquées par le même fabricant.

Ici, comme le montre la figure 4, le motif des marques de centrage provisoires de la lentille ophtalmique 20 considérée comprennent :
- une cible 24 qui localise le "point de centrage optique" de la lentille 20, ce point de centrage optique correspondant conventionnellement au point où la puissance de réfringence sphérique de la lentille est nulle (pour une lentille unifocale) ou au point de «référence prisme » où est mesurée la puissance prismatique nominale de la lentille ophtalmique qui correspond à la prescription du porteur (pour une lentille progressive) ;
- un arc de cercle 25 matérialisant le centre de la zone de vision de loin de la lentille ;
- un cercle 26 matérialisant le centre de la zone de vision de près de la lentille ;
- deux traits d'horizon 27 repérant l'horizontale de la lentille ophtalmique 10.

Parmi les caractéristiques géométriques de la lentille, on définit en particulier :
- un diamètre avant détourage,
- une cambrure,
- une cartographie de forme de la face avant 22, et
- une cartographie d'épaisseurs.

Le diamètre avant détourage correspond au diamètre que présente la tranche 23 de la lentille ophtalmique 20 lorsque cette lentille est reçue par l'opticien.

La cambrure de la lentille correspond à la courbure moyenne de la lentille ophtalmique, qui dépend typiquement du moule utilisé pour la fabriquer. Elle s'exprime généralement sous la forme d'une « base de verre » correspondant à la puissance (exprimée en dioptries) de la face avant 22 de la lentille.

Comme le montre la figure 5, la cartographie de forme de la face avant 22 est réalisée à partir d'un maillage de la lentille ophtalmique 20. Ce maillage est réalisé avec un système de coordonnées sphériques Rho, Theta, Z, dans un repère centré sur le centre optique de la lentille ophtalmique 20. En pratique, ce maillage consiste simplement en une pluralité de coordonnées correspondant à l'altitude Z de chaque point de la face avant de la lentille qui présente une coordonnée radiale Rho égale à un multiple de 0,8 centimètre et une coordonnée angulaire Theta égale à un multiple de 36 degrés.

La cartographie d'épaisseurs est réalisée sur le même modèle, et consiste en une pluralité d'épaisseurs correspondant aux épaisseurs de la lentille ophtalmique 20 en chaque point présentant une coordonnée radiale Rho égale à un multiple de 0,8 centimètre et une coordonnée angulaire Theta égale à un multiple de 36 degrés.

En variante, on pourrait bien sûr prévoir de caractériser l'épaisseur de la lentille en déterminant une cartographie de forme de sa face arrière.

Comme le montre la figure 4, la lentille ophtalmique 20 comporte ici en face avant 22 une marque, appelée « marque mémoire » par opposition aux marques de centrage, qui est formée par un code ici bidimensionnel 28 (ou « code 2D ») qui stocke sous forme numérique une pluralité d'informations relatives à des caractéristiques mécaniques, géométriques et optiques de la lentille ophtalmique 20.

Ce code bidimensionnel 28 stocke préférentiellement au moins quatre informations relatives à des caractéristiques mécaniques, géométriques ou optiques de la lentille ophtalmique.

A titre d'exemple, par économie de mémoire de stockage, ce code bidimensionnel pourrait ne stocker que les quatre informations que sont :
- le rayon de courbure de la face avant de la lentille ophtalmique (ou « base avant de lentille »),
- le rayon de courbure de la face arrière de la lentille ophtalmique (ou « base arrière de lentille »),
- l'épaisseur au centre optique de la lentille, et
- l'angle formé entre les deux normales aux faces avant et arrière de la lentille au niveau du centre optique de la lentille.

Ici, ce code présente une capacité de stockage suffisante pour stocker l'ensemble des caractéristiques mécaniques, géométriques et optiques précitées de la lentille ophtalmique. Il stocke donc des informations relatives :
- au matériau de la lentille,
- au module d'Young de la lentille,
- au type de revêtement (hydrophobe, anti-rayure, anti-reflet, ...) de la lentille,
- à la résistance aux fendillements du revêtement de la lentille,
- à la catégorie mécanique globale de la lentille (fragile, intermédiaire ou solide),
- au type de la lentille (unifocale, bifocale, progressive),
- à l'indice de réfraction de la lentille,
- à la forme du motif des marques de centrage de la lentille,
- à la destination de la lentille (position gauche ou droite),
- à la puissance de réfringence sphérique de la lentille,
- à la puissance de réfringence cylindrique de la lentille,
- à l'orientation de l'axe de cylindre par rapport aux traits d'horizon de la lentille,
- aux puissances de réfringence prismatique horizontale et verticale de la lentille,
- à l'addition de la lentille,
- à la forme du motif de marques de centrage de la lentille,
- au diamètre avant détourage de la lentille,
- à la base (avant et arrière) ou à la cambrure de la lentille,
- à la cartographie de forme de la face avant 22 de la lentille,
- à la cartographie d'épaisseurs de la lentille, et
- à des données commerciales de la lentille, telles que la référence de commande de la lentille, les nom et prénom du client auquel est destinée la lentille, ...

Ce code bidimensionnel est ici un code formé par un code standard, de format tel que le Datamatrix, le code QR, le Shotcode, le PDF417, ou encore MaxiCode. Par conséquent, la liste de caractéristiques stockées dans le code bidimensionnel n'est pas limitative, et pourra en particulier être modifiée au besoin.

La marque mémoire peut être tamponnée sur la lentille ophtalmique, ou bien, de manière préférentielle, imprimée sur la lentille ou sur un autocollant collé à la lentille ophtalmique.

La marque mémoire se présente sous la forme d'un carré, présentant des côtés de longueurs environ égales à 1 centimètre.

Elle comporte une pluralité de pixels qui présentent tous des dimensions supérieures ou égales à 0,1 millimètre, ici égal à 0,2 millimètres. Grâce à ces dimensions, les pixels sont tous détectables par la caméra numérique des moyens de centrage du dispositif centreur-bloqueur 200.

Les moyens de traitement d'images de ce dispositif centreur-bloqueur 200 sont alors ici équipés d'un logiciel de décryptage adapté à déterminer, en fonction des couleurs des pixels, les informations contenues dans ce code bidimensionnel 28.

Les informations sont préférentiellement stockées de manière redondante dans le code bidimensionnel 28, en des zones distinctes de la marque mémoire. Ainsi, si une partie de cette marque mémoire est effacée lors du transport de la lentille, les informations restent lisibles sur la partie restante de cette marque.

Comme le montre la figure 4, ce code comporte au moins un symbole 29 distinctif, ici au nombre de trois, qui permet de repérer l'orientation du code bidimensionnel 28 sur la lentille.

Ici, chaque pixel est de couleur noire ou blanche, et correspond ainsi à un bit. En variante, on pourrait prévoir d'utiliser des couleurs différentes, plus facilement détectables si la lentille est foncée pour présenter une fonction de protection solaire.

Cette marque mémoire est par ailleurs préférentiellement positionnée à distance des marques de centrage 24 - 27 tamponnées sur la face avant 22 de la lentille, de manière à ne pas se confondre avec celles-ci.

Elle est avantageusement aussi située à faible distance de la tranche 23 de la lentille ophtalmique 20, de préférence à moins d'un centimètre de cette tranche. Ainsi, ce code disparaît automatiquement lorsque la lentille est détourée. En variante, on pourrait prévoir qu'elle soit située dans la partie centrale de la lentille ophtalmique, auquel cas il faudrait prévoir qu'elle soit susceptible d'être effacée ou ôtée de la lentille après détourage.

Le procédé de préparation de chaque lentille ophtalmique 20 par l'opticien est alors réalisé à l'aide des informations contenues dans le code bidimensionnel.

Les opérations de centrage et d'usinage sont plus particulièrement ici mises en oeuvre à l'aide de ces informations.

### Opération de centrage

L'opération de centrage est plus particulièrement mise en oeuvre de la manière suivante.

Au cours d'une première étape, l'opticien immobilise la lentille ophtalmique 20 concernée entre les trois mors 215 de l'appareil centreur-bloqueur 200.

Dans cette position, la marque mémoire 28 de la lentille ophtalmique se trouve sensiblement située dans le plan focal de la caméra numérique de l'appareil, si bien que cette caméra numérique est adaptée à capturer, au cours d'une seconde étape, une image nette et globale de la lentille ophtalmique 20.

L'image ainsi acquise est une « image brute » en ce sens qu'elle n'est pas traitée ou modifiée par quelque moyen que ce soit. Elle est globale en ce sens que l'ensemble de la lentille ophtalmique apparaît sur cette image.

Au cours d'une troisième étape, les moyens de traitement d'images de l'appareil analysent cette image.

Ils sont à cet effet conçus pour repérer la marque mémoire à l'aide de ses symboles distinctifs 29, puis pour décrypter les informations stockées dans le code bidimensionnel 28. Les moyens de traitement d'images mémorisent ainsi l'ensemble des caractéristiques optiques, mécaniques et géométriques de la lentille ophtalmique 20. Ils transmettent par ailleurs ces données à l'unité de pilotage 400, de manière à les rendre accessibles à l'appareil de détourage 300.

Les moyens de traitement d'images acquièrent ainsi en particulier la forme du motif formé par les marques de centrage 24 - 27 de la lentille ophtalmique ainsi que la destination de la lentille (en position droite ou gauche sur la monture). Ils peuvent ainsi, dans un second temps, localiser plus facilement les marques de centrage 24 - 27 sur l'image brute. En variante, on pourrait également prévoir, dans un premier temps, d'acquérir et de traiter une première image de la lentille faisant apparaitre la marque mémoire 28 afin de lire les informations contenues dans le code bidimensionnel, puis, dans un second temps, d'acquérir et de traiter une seconde image de la lentille faisant apparaitre ses marques de centrage afin de centrer la lentille.

Les moyens de traitement d'images acquièrent en particulier les valeurs théoriques des puissances de réfringence optique de la lentille, qui sont stockées dans le code bidimensionnel. Ils mesurent par ailleurs les valeurs réelles des puissances de réfringence optique de la lentille. Ils peuvent ainsi comparer ces valeurs et contrôler qu'elles sont sensiblement identiques. Si l'écart entre ces valeurs est supérieur à un seuil prédéterminé, les moyens de traitement sont ici agencés pour afficher sur l'écran de visualisation 205 un message d'erreur indiquant à l'opticien que la lentille présente un défaut de puissance de réfringence.

Les valeurs théoriques des puissances de réfringence optique de la lentille qui sont stockées dans le code bidimensionnel peuvent également être comparées, automatiquement ou de visu, avec les données de commande de la lentille, afin de contrôler que ces données sont identiques.

Si les valeurs sont sensiblement identiques, les moyens de traitement acquièrent la forme du contour 11 suivant lequel il faudra détourer la lentille ophtalmique 20 pour qu'elle soit montable sur la monture de lunettes sélectionnée par le client. Cette forme aura été préalablement mesurée par l'appareil de lecture de contours 100, qui l'aura alors transmise à l'unité de pilotage 400 pour la rendre accessible à l'appareil centreur-bloqueur 200.

Les moyens de traitement superposent alors une image de ce contour 11 sur l'image de la lentille ophtalmique 20 (voir figure 4), en une position qui est fonction des positions des marques de centrage 24 - 26 précédemment relevées. De manière classique, le contour est alors orienté par rapport aux traits d'horizon 27 de la lentille suivant un angle d'inclinaison qui est fonction de l'orientation de l'axe de cylindre de la lentille. Cet angle d'inclinaison aura pour cela préférentiellement été lu dans le code bidimensionnel 28, ce qui évite toute saisie manuelle par l'opticien de cet angle d'inclinaison.

Les moyens de traitement acquièrent alors les cartographies d'épaisseurs et de la face avant 22 de la lentille ophtalmique. Compte tenu du contour 11, ils en déduisent une représentation tridimensionnelle de la forme que présentera la lentille ophtalmique 20 après usinage.

Cette représentation tridimensionnelle permet tout d'abord de vérifier que la tranche 23 de la lentille présentera après usinage une épaisseur suffisante pour, d'une part, permettre le montage de la lentille sur la monture (en vérifiant par exemple que l'épaisseur de la tranche est suffisante pour réaliser un biseau en vue du montage de la lentille dans un cercle d'une monture de lunettes cerclée), et pour, d'autre part, s'assurer que la lentille une fois détourée sera suffisamment solide. Cette épaisseur est à cet effet comparée avec une valeur seuil qui est soit prédéterminée, soit déterminée en fonction du matériau ou du module d'Young ou de la catégorie mécanique globale de la lentille. Si l'épaisseur est inférieure en au moins un point du contour 11 à ladite valeur seuil, les moyens de traitement sont ici agencés pour afficher sur l'écran de visualisation 205 un message d'erreur indiquant à l'opticien que la lentille présente une épaisseur trop faible.

En revanche, si l'épaisseur est suffisante, la représentation tridimensionnelle de la lentille est affichée sur l'écran de visualisation 205 de l'appareil, en superposition avec une image tridimensionnelle de la monture de lunettes, de manière que l'opticien puisse valider ou non les calculs réalisés. Cette superposition d'images lui permettra en particulier de juger de l'esthétisme du montage de la lentille sur la monture de lunettes. Elle pourra être présentée sous diverses formes, par exemple sous la forme d'un schéma tridimensionnel manipulable pour être visualisé sous différents angles, ou encore sous la forme d'un schéma en coupe pour visualiser la position de la tranche de la lentille par rapport à la monture de lunettes.

Cette opération de validation est ainsi mise en oeuvre alors même que la lentille ophtalmique est encore sur la plaque support 201 de l'appareil centreur-bloqueur. Elle permet ainsi d'anticiper d'éventuels problèmes de montage de la lentille sur la monture de lunettes, de manière à pouvoir les corriger plus aisément, plus rapidement, et pour un coût réduit.

Ici, cette représentation tridimensionnelle de la lentille est affichée sur l'écran de visualisation 205 de l'appareil. En variante, elle pourrait également être affichée sur un autre écran, situé à distance de l'appareil. Plus précisément, cette image tridimensionnelle pourrait être transmise par réseau, par exemple via Internet, à un ordinateur distant. Typiquement, si la lentille ophtalmique est détourée non pas par l'opticien lui-même mais par le fabricant de lentilles, on pourra ainsi prévoir de faire valider le montage par l'opticien avant de détourer la lentille ophtalmique chez le fabricant.

### Opération de blocage

Une fois la position du contour 11 par rapport à la lentille ophtalmique validée, le bras de manipulation 206 de l'appareil centreur-bloqueur 200 procède au blocage de la lentille ophtalmique 20.

Il vient à cet effet saisir l'un des accessoires de blocage disposés sur l'un des réceptacles 207 prévus sur le bâti 204 pour venir le déposer sur la face avant de la lentille ophtalmique 20, au centre géométrique (ou « centre boxing ») du contour 11.

Avantageusement ici, la dépose de cet accessoire de blocage n'a pas à être précédée d'une opération de palpage de la face avant de la lentille ophtalmique en vue de déterminer l'altitude de la lentille au point de dépose de l'accessoire de blocage. Cette altitude peut en effet être déduite des cartographies d'épaisseurs et de forme de la face avant de la lentille ophtalmique 20, stockées dans le code bidimensionnel.

Ici, il est prévu que le bras de manipulation puisse saisir l'un ou l'autre de deux accessoires de blocage. Ces accessoires de blocage sont ici identiques mais revêtus de couches adhérentes présentant des coefficients d'adhérence différents. Les moyens de pilotage du bras de manipulation 206 sont alors ici conçus pour choisir l'un ou l'autre de ces deux accessoires de blocage en fonction du type de revêtement de la lentille et de la résistance aux fendillements de cette lentille.

Une lentille présentant un revêtement fragile sera alors bloquée avec un accessoire de blocage dont la couche adhésive présente un coefficient d'adhérence réduit, de manière à éviter de détériorer son revêtement. Au contraire, une lentille présentant un revêtement solide sera bloquée avec un accessoire de blocage dont la couche adhésive présente un coefficient d'adhérence important, ce qui permettra alors de détourer la lentille plus rapidement, sans risque de glissement.

En variante, on pourra prévoir d'utiliser des accessoires de blocage de formes différentes, auquel cas les moyens de pilotage du bras de manipulation 206 seront conçus pour choisir l'un ou l'autre de ces deux accessoires de blocage selon que la lentille est prévue pour être montée en position droite ou gauche sur la monture.

### Opération de détourage

Enfin, l'opération de centrage est mise en oeuvre de la manière suivante. L'opticien positionne la lentille ophtalmique 20, équipée de son accessoire de blocage, entre les deux arbres 302, 303 de l'appareil de détourage 300. Il commande alors, à l'aide d'un bouton-poussoir, le rapprochement de ces deux arbres de manière qu'ils prennent la lentille en sandwich. L'unité électronique prévue dans cet appareil de détourage 300 pilote alors ces deux arbres de manière qu'ils exercent sur la lentille un effort de serrage déduit des caractéristiques mécaniques de la lentille, en particulier de la résistance aux fendillements de son revêtement. En variante, on pourrait prévoir que la valeur maximale de l'effort de serrage par unité d'aire (en N/m²) à appliquer sur la lentille soit directement mémorisée dans le code bidimensionnel.

L'appareil de lecture de contours 100 permet à l'opticien, au cours d'une sixième opération S.6, de relever la forme des contours 11 des cercles ou des lentilles de présentation de la monture de lunettes sélectionnée par le client.

Après s'être assuré que la forme des contours 11 des cercles ou des lentilles de présentation de la monture de lunettes sélectionnée par le client a été acquise par l'appareil de lecture de contours 100 puis transmise à l'appareil de détourage 300, l'opticien sélectionne alors le type (cerclé, semi-cerclé ou percé) de la monture de lunettes sélectionnée par le client. Il ne saisit en revanche aucune autre information, puisque les autres informations nécessaires au détourage de la lentille ophtalmique 20 sont stockées dans son code bidimensionnel.

Le détourage de la lentille est alors réalisé en deux opérations d'ébauche et de finition.

Pour l'ébauche de la lentille, on utilise soit la meule cylindrique 210 pour réduire grossièrement les rayons de la lentille, soit la fraise 322 pour découper la lentille, jusqu'à ce qu'elle présente une forme identique ou approchée de celle du contour 11.

Ici, avantageusement, le choix de l'outil d'ébauche est réalisé en fonction des informations stockées dans le code bidimensionnel. A titre d'exemple, la lentille pourra être ébauchée (à faible coût) à l'aide de la meule cylindrique si ses caractéristiques mécaniques permettent un tel usinage ou si sa catégorie mécanique globale est identifiée comme « intermédiaire » ou comme « solide ». On pourra au contraire prévoir de la détourer à l'aide de la fraise 322 si elle présente une catégorie mécanique globale identifiée comme « faible ».

Au cours de cette ébauche, la vitesse de rotation de l'outil et la vitesse de pivotement des arbres 302, 303 de blocage de la lentille sont calculées en fonction des caractéristiques mécaniques de la lentille ou en fonction de sa catégorie mécanique globale. De cette manière, il est possible d'ébaucher la lentille ophtalmique 20 à une vitesse optimisée en fonction de sa solidité.

Pour la finition de la lentille, on utilise au choix :
- la meule de biseautage 311 pour réaliser un biseau sur la tranche de la lentille ophtalmique si celle-ci est destinée à être montée sur une monture de lunettes cerclées,
- la meulette de finition 323 pour réaliser une rainure sur la tranche de la lentille ophtalmique si celle-ci est destinée à être montée sur une monture de lunettes semi-cerclées,
- le foret de perçage 321 pour réaliser des trous de perçage au travers de la lentille si celle-ci est destinée à être montée sur une monture de lunettes percée.

Ici encore, la meule de biseautage 311 ou la meulette de finition 323 pourra être pilotée suivant des paramètres d'usinage choisis en fonction des caractéristiques mécaniques de la lentille ou en fonction de sa catégorie mécanique globale.

Typiquement, les paramètres d'usinage qui seront ainsi choisis sont la vitesse de rotation de l'outil d'usinage, la profondeur de passe de l'outil d'usinage, sa vitesse d'avance, ou de manière plus générale l'effort d'usinage au niveau du point de contact entre l'outil et la lentille. On pourra également prévoir de choisir l'effort de serrage de la lentille ophtalmique entre les arbres de serrage et d'entraînement en rotation 302, 303 de la meuleuse en fonction de ces caractéristiques mécaniques.

En variante, on pourrait prévoir que ces paramètres d'usinage soient directement mémorisés dans le code bidimensionnel.

Le foret de perçage 321 pourra quant à lui être piloté en une position et avec une orientation adaptées par rapport à la lentille (c'est-à-dire perpendiculairement à la face avant de la lentille au niveau du point de perçage) grâce à la cartographie de forme de la face avant de la lentille mémorisée dans le code bidimensionnel 28.

Une fois le détourage de la première lentille ophtalmique du job effectué, l'opticien extrait cette première lentille des deux arbres 302, 303 de l'appareil et la remplace par la seconde lentille. Avant de démarrer l'usinage de cette seconde lentille, l'unité de pilotage vérifie que la destination de la seconde lentille (en position droite ou gauche sur la monture) est différente de celle de la première lentille. Si tel n'est pas le cas, elle commande l'affichage d'un message d'erreur à destination de l'opticien.

La présente invention n'est nullement limitée aux modes de réalisation décrits et représentés, mais l'homme du métier saura y apporter toute variante conforme à son esprit.

En particulier, la lentille ophtalmique pourra être cartographiée suivant un maillage différent de celui précédemment exposé. Une méthode basée sur les courbes de Bézier quadratique de degrés 3 permettra ainsi de réduire le nombre de données redondantes, de manière à libérer de l'espace dans le code bidimensionnel. On pourra par ailleurs prévoir un maillage spécifique pour les lentilles présentant des singularités (par exemple les lentilles bifocales ou les lentilles en demi-lunes).

Suivant une autre variante, on pourra prévoir de déterminer plus finement l'effort de serrage à appliquer sur la lentille au cours de l'opération de détourage, de la manière suivante.

Comme on le sait, les opérations de serrage et de perçage engendrent des phénomènes de flexion du verre, qui génèrent des contraintes dans la lentille. Au-delà d'un certain seuil, dit de « rupture crazing », le revêtement de la lentille ophtalmique peut se fissurer et rendre ainsi la lentille ophtalmique inutilisable.

Pour calculer au mieux l'effort de serrage et l'effort de perçage de la lentille ophtalmique, on pourra alors ici prévoir de stocker dans le code bidimensionnel une cartographie de répartition des contraintes sur la face avant de la lentille ophtalmique. Cette cartographie propre à la lentille ophtalmique pourra alors être exploitée de manière à vérifier que les contraintes dans la lentille restent constamment inférieures au seuil de « rupture crazing ».

Selon une autre variante de l'invention, on pourra prévoir que la marque mémoire se présente, non pas sous la forme d'une code bidimensionnel (ou code-barres bidirectionnel) stockant des informations suivant deux axes distincts, mais au contraire sous la forme d'un code unidimensionnel (ou code-barres unidirectionnel) stockant des informations suivant un seul et même axe. Dans cette variante, le nombre d'informations stockées dans le code est toutefois réduit, sauf à prévoir une marque de grande taille (moins facilement exploitable).

## Revendications

1. Procédé de préparation d'une lentille ophtalmique (20) en vue de son montage sur une monture de lunettes (10), cette lentille ophtalmique (20) comportant une marque mémoire (28) qui est située sur l'une de ses faces optiques (22) et qui forme un code unidimensionnel ou bidimensionnel stockant sous forme numérique au moins une information relative à une caractéristique mécanique, géométrique ou optique de la lentille ophtalmique (20), comportant des étapes consistant à :
a) capturer une image brute d'une partie au moins de ladite face optique (22) de la lentille ophtalmique (20), sur laquelle apparaissent une image de ladite marque mémoire (28) et des marques de centrage (24 - 27) de la lentille ophtalmique (20),
b) traiter l'image brute acquise à l'étape a) afin de décrypter l'information stockée dans ledit code,
c) centrer ladite lentille ophtalmique (20) en fonction de la position desdites marques de centrage (24 - 27) apparaissant sur ladite image brute puis détourer ladite lentille ophtalmique (20),
dans lequel l'étape c) est réalisée en fonction de l'information décryptée à l'étape b).

2. Procédé selon la revendication 1 mis en oeuvre par un dispositif de préparation de lentilles comportant un appareil de centrage (200) équipé de moyens d'acquisition agencés pour acquérir des images brutes de lentilles ophtalmiques (20) sur lesquelles apparaissent des images de marques de centrage (24 - 27) inscrites sur ces lentilles ophtalmiques (20), dans lequel, à l'étape a), l'image brute est acquise par les moyens d'acquisition dudit appareil de centrage (200).

3. Procédé selon la revendication 2, dans lequel, à l'étape a), l'image de la marque mémoire (28) et l'image des marques de centrage (24 - 27) inscrites sur la lentille ophtalmique (20) sont acquises simultanément, et forment une même image globale.

4. Procédé selon l'une des revendications 2 à 3, dans lequel, ledit appareil de centrage (200) comportant des moyens de traitement d'images pour repérer les positions desdites marques de centrage (24 - 27) sur ladite lentille ophtalmique (20), à l'étape b), l'image de la marque mémoire (28) est traitée par les moyens de traitement d'images dudit appareil de centrage (200).

5. Procédé selon l'une des revendications 1 à 4, dans lequel ledit code est un code bidimensionnel stockant au moins quatre informations distinctes.

6. Procédé selon la revendication 5, dans lequel lesdites informations sont relatives aux formes des faces avant et arrière de la lentille ophtalmique (20), à l'épaisseur de la lentille ophtalmique (20) et à l'orientation relatives des faces avant et arrière de la lentille ophtalmique (20).

7. Procédé selon l'une des revendications 1 à 6, dans lequel, ledit code stockant une valeur d'une caractéristique optique de la lentille ophtalmique (20), il est prévu une étape de contrôle de la lentille ophtalmique (20) au cours de laquelle :
- on acquiert, par une mesure sur la lentille ophtalmique (20) ou par une lecture dans un registre comportant des données de commande de la lentille ophtalmique, une valeur de ladite caractéristique optique,
- on compare ladite valeur acquise avec la valeur stockée dans ledit code, et
- on vérifie que ces valeurs sont cohérentes.

8. Procédé selon l'une des revendications 1 à 8, dans lequel, ledit code stockant une information relative à une cartographie de l'épaisseur de la lentille ophtalmique (20), il est prévu une étape de contrôle de la lentille ophtalmique (20) au cours de laquelle :
- on acquiert la forme d'un contour (11) suivant lequel la lentille ophtalmique devra être détourée,
- on positionne le contour (11) acquis sur la lentille ophtalmique (20),
- on détermine l'épaisseur de la lentille ophtalmique (20) en une pluralité de points du contour (11), compte tenu de l'information décryptée à l'étape b), et
- on vérifie que la lentille ophtalmique (20) présente, en chacun desdits points, une épaisseur supérieure à un seuil minimum prédéterminé.

9. Procédé selon l'une des revendications 1 à 8, dans lequel, ledit code stockant une information relative à une cartographie des faces optiques (22) de la lentille ophtalmique (20), il est prévu une étape de visualisation de la lentille ophtalmique (20) au cours de laquelle :
- on acquiert la forme d'un contour (11) suivant lequel la lentille ophtalmique devra être détourée,
- on positionne le contour (11) acquis sur la lentille ophtalmique (20),
- on calcule la forme tridimensionnelle que présentera la lentille ophtalmique (20) à l'issue de l'étape c), à l'aide de l'information décryptée à l'étape b), et
- on affiche cette forme tridimensionnelle sur un écran de contrôle (205) visible par l'utilisateur.

10. Procédé selon l'une des revendications 1 à 9, dans lequel, ledit code stockant une information relative à la forme d'un motif de marques de centrage (24 - 27) inscrites sur la lentille ophtalmique (20), il est prévu une étape de centrage de la lentille ophtalmique (20) au cours de laquelle on détecte la position du motif de marques de centrage (24 - 27) sur une image de la lentille ophtalmique (20), à l'aide de l'information décryptée à l'étape b).

11. Procédé selon l'une des revendications 1 à 10, dans lequel, ledit code stockant une information relative à une caractéristique mécanique de la lentille ophtalmique, à l'étape c), la lentille ophtalmique est détourée avec un outil et/ou suivant des paramètres d'usinage choisis en fonction de l'information décryptée à l'étape b).

12. Procédé selon l'une des revendications 1 à 11, dans lequel ladite information décryptée à l'étape b) comporte au moins l'une des caractéristiques suivantes :
- une catégorie optique à laquelle appartient la lentille considérée parmi les catégories suivantes : unifocale, multifocale ou progressive,
- une catégorie mécanique à laquelle appartient la lentille considérée parmi au moins les catégories suivantes : fragile ou solide,
- un matériau,
- un indice de réfraction,
- un motif de marques de centrage,
- une référence d'un type de lentilles,
- une cambrure,
- un diamètre avant détourage,
- un traitement de surface,
- une cartographie de forme de l'une au moins des faces optiques,
- une épaisseur ou une cartographie d'épaisseur,
- une puissance optique sphérique,
- une puissance optique cylindrique,
- une puissance optique prismatique,
- une orientation d'axe de cylindre,
- une addition,
- une destination en position gauche ou droite sur la monture de lunettes,
- une résistance aux fendillements,
- une donnée commerciale.

13. Appareil (200) comportant :
- des moyens de support (202) d'une lentille ophtalmique (20) qui présente, sur l'une et/ou l'autre de ses faces optiques (22), des marques de centrage (24 - 27) et une marque mémoire (28) formant un code unidimensionnel ou bidimensionnel qui stocke sous forme numérique au moins une information relative à une caractéristique mécanique, géométrique ou optique de la lentille ophtalmique (20),
- des moyens de capture d'une image brute de ladite lentille ophtalmique (20),
- des moyens de traitement d'images agencés pour traiter l'image brute de la lentille capturée par lesdits moyens de capture, en vue de repérer les positions desdites marques de centrage (24 - 27) sur ladite lentille ophtalmique (20) et de décrypter l'information contenue dans le code de la marque mémoire (28), et
- des moyens de centrage adaptés à centrer ladite lentille ophtalmique (20) en fonction des positions repérées de ses marques de centrage (24 - 27).

## Patentansprüche

1. Verfahren zum Vorbereiten einer ophthalmischen Linse (20) im Hinblick auf ihre Montage an einem Brillengestell (10), wobei diese ophthalmische Linse (20) eine Speichermarkierung (28) aufweist, die sich auf einer ihrer optischen Flächen (22) befindet und einen eindimensionalen oder zweidimensionalen Code bildet, der in digitaler Form wenigstens eine Information bezüglich einer mechanischen, geometrischen oder optischen Eigenschaft der ophthalmischen Linse (20) speichert, das die Schritte umfasst, die darin bestehen:
a) ein Rohbild wenigstens eines Teils der optischen Fläche (22) der ophthalmischen Linse (20), auf der ein Bild der Speichermarkierung (28) und Zentrierungsmarkierungen (24-27) der ophthalmischen Linse (20) erscheinen, aufzunehmen,
b) das im Schritt a) erfasste Rohbild zu verarbeiten, um die in dem Code gespeicherte Information zu entschlüsseln,
c) die ophthalmische Linse (20) als Funktion der Position der Zentrierungsmarkierungen (24-27), die auf dem Rohbild erscheinen, zu zentrieren und dann die ophthalmische Linse (20) auszuschneiden,
wobei der Schritt c) als Funktion der im Schritt b) entschlüsselten Information ausgeführt wird.

2. Verfahren nach Anspruch 1, das von einer Vorrichtung zum Vorbereiten von Linsen ausgeführt wird, die eine Zentrierungseinrichtung (200) umfasst, die mit Erfassungsmitteln ausgerüstet ist, die dafür ausgelegt sind, Rohbilder ophthalmischer Linsen (20) zu erfassen, auf denen Bilder von Zentrierungsmarkierungen (24-27), die in diese ophthalmischen Linsen (20) geschrieben sind, erscheinen, wobei im Schritt a) das Rohbild durch die Erfassungsmittel der Zentrierungsmittel (200) erfasst wird.

3. Verfahren nach Anspruch 2, wobei im Schritt a) das Bild der Speichermarkierung (28) und das Bild der Zentrierungsmarkierungen (24-27), die in die ophthalmische Linse (20) geschrieben sind, gleichzeitig erfasst werden und dasselbe globale Bild bilden.

4. Verfahren nach einem der Ansprüche 2 bis 3, wobei die Zentrierungseinrichtung (200) Bildverarbeitungsmittel umfasst, um die Positionen der Zentrierungsmarkierungen (24-27) auf der ophthalmischen Linse (20) im Schritt b) zu markieren, wobei das Bild der Speichermarkierung (28) durch die Bildverarbeitungsmittel der Zentrierungseinrichtung (200) verarbeitet wird.

5. Verfahren nach einem der Ansprüche 1 bis 4, wobei der Code ein zweidimensionaler Code ist, der wenigstens vier verschiedene Informationen speichert.

6. Verfahren nach Anspruch 5, wobei die Informationen auf die Formen der vorderen und der hinteren Fläche der ophthalmischen Linse (20), auf die Dicke der ophthalmischen Linse (20) und auf die relative Orientierung der vorderen Fläche und der hinteren Fläche der ophthalmischen Linse (20) bezogen sind.

7. Verfahren nach einem der Ansprüche 1 bis 6, wobei dann, wenn der Code einen Wert einer optischen Eigenschaft der ophthalmischen Linse (20) speichert, ein Schritt zum Kontrollieren der ophthalmischen Linse (20) vorgesehen ist, in dessen Verlauf:
- durch eine Messung an der ophthalmischen Linse (20) oder durch ein Lesen in einem Register, das Steuerdaten der ophthalmischen Linse enthält, ein Wert der optischen Eigenschaften erfasst wird,
- der erfasste Wert mit dem in dem Code gespeicherten Wert verglichen wird und
- verifiziert wird, dass diese Werte kohärent sind.

8. Verfahren nach den Ansprüchen 1 bis 7, wobei dann, wenn der Code eine Information speichert, die auf eine Kartographie der Dicke der ophthalmischen Linse (20) bezogen ist, ein Schritt zum Steuern der ophthalmischen Linse (20) vorgesehen ist, in dessen Verlauf:
- die Form eines Umrisses (11), längs dessen die ophthalmische Linse ausgeschnitten werden soll, erfasst wird,
- der erfasste Umriss (11) auf der ophthalmischen Linse (20) positioniert wird,
- die Dicke der ophthalmischen Linse (20) an mehreren Punkten des Umrisses (11) unter Berücksichtigung der im Schritt b) entschlüsselten Information bestimmt wird und
- verifiziert wird, dass die ophthalmische Linse (20) an jedem der Punkte eine Dicke aufweist, die größer als ein vorgegebener minimaler Schwellenwert ist.

9. Verfahren nach einem der Ansprüche 1 bis 8, wobei dann, wenn der Code eine Information speichert, die auf eine Kartographie der optischen Flächen (22) der ophthalmischen Linse (20) bezogen ist, ein Schritt zum Visualisieren der ophthalmischen Linse (20) vorgesehen ist, in dessen Verlauf:
- die Form eines Umrisses (11), längs dessen die ophthalmische Linse ausgeschnitten werden soll, erfasst wird,
- der erfasste Umriss (11) auf der ophthalmischen Linse (20) positioniert wird,
- die dreidimensionale Form, die die ophthalmische Linse (20) am Ende des Schrittes c) aufweist, mit Hilfe der im Schritt b) entschlüsselten Information berechnet wird und
- diese dreidimensionale Form auf einem von einem Anwender sichtbaren Steuerbildschirm (205) angezeigt wird.

10. Verfahren nach einem der Ansprüche 1 bis 9, wobei dann, wenn der Code eine Information speichert, die auf die Form eines Musters von Zentrierungsmarkierungen (24-27) bezogen ist, die in die ophthalmische Linse (20) geschrieben sind, ein Schritt zum Zentrieren der ophthalmischen Linse (20) vorgesehen ist, in dessen Verlauf die Position des Musters von Zentrierungsmarkierungen (24-27) auf einem Bild der ophthalmischen Linse (20) mit Hilfe der im Schritt b) entschlüsselten Information detektiert wird.

11. Verfahren nach einem der Ansprüche 1 bis 10, wobei dann, wenn der Code eine Information speichert, die auf eine mechanische Eigenschaft der ophthalmischen Linse bezogen ist, im Schritt c) die ophthalmische Linse mit einem Werkzeug und/oder gemäß Bearbeitungsparametern, die als Funktion der im Schritt b) entschlüsselten Informationen gewählt werden, ausgeschnitten wird.

12. Verfahren nach einem der Ansprüche 1 bis 11, wobei die im Schritt b) entschlüsselte Information wenigstens eine der folgenden Eigenschaften enthält:
- eine optische Kategorie, zu der die betrachtete Linse gehört, unter den folgenden Kategorien: unifokal, multifokal oder progressiv,
- eine mechanische Kategorie, zu der die betrachtete Linse gehört, unter wenigstens den folgenden Kategorien: zerbrechlich oder fest,
- ein Material,
- ein Brechungsindex,
- ein Muster der Zentrierungsmarkierungen,
- eine Referenz eines Linsentyps,
- eine Krümmung,
- ein vorderer Ausschneidedurchmesser,
- eine Oberflächenbearbeitung,
- eine Kartographie der Form wenigstens einer der optischen Flächen,
- eine Dicke oder eine Dickenkartographie,
- ein sphärischer optischer Brechwert,
- ein zylindrischer optischer Brechwert,
- ein prismatischer optischer Brechwert,
- eine Zylinderorientierungsachse,
- eine Addition,
- ein Ziel an der linken oder der rechten Position an dem Brillengestell,
- ein Widerstand gegenüber Rissbildungen,
- kommerzielle Daten.

13. Vorrichtung (200), die Folgendes umfasst:
- Mittel (202) zum Tragen einer ophthalmischen Linse (20), die auf einer und/oder auf der anderen ihrer optischen Flächen (22) Zentrierungsmarkierungen (24-27) und eine Speichermarkierung (28), die einen eindimensionalen oder zweidimensionalen Code bildet, der in digitaler Form wenigstens eine Information speichert, die auf eine mechanische, geometrische oder optische Eigenschaft der ophthalmischen Linse (20) bezogen ist, aufweist,
- Mittel zum Aufnehmen eines Rohbildes der ophthalmischen Linse (20),
- Bildverarbeitungsmittel, die dafür ausgelegt sind, das Rohbild der Linse, das durch die Aufnahmemittel aufgenommen worden ist, zu verarbeiten, um die Positionen der Zentrierungsmarkierungen (24-27) auf der ophthalmischen Linse (20) zu markieren und die Information, die in dem Code der Speichermarkierung (28) enthalten ist, zu entschlüsseln, und
- Zentrierungsmittel, die dafür ausgelegt sind, die ophthalmische Linse (20) als Funktion der markierten Positionen der Zentrierungsmarkierungen (24-27) zu zentrieren.

## Claims

1. A method of preparing an ophthalmic lens (20) for mounting in an eyeglass frame (10), the ophthalmic lens (20) including a memory mark (28) that is situated on one of its ophthalmic faces (22) and that forms a one- or two-dimensional code storing in digital form at least one item of information relating to a mechanical, geometrical, or optical characteristic of the ophthalmic lens (20), the method comprising steps consisting in:
a) capturing a raw image of at least a portion of said optical face (22) of the ophthalmic lens (20), said raw image including an image of said memory mark (28) and of centering marks (24 - 27) of the ophthalmic lens (20);
b) processing the raw image acquired in step a) in order to decode the information stored in said code; and
c) centering said ophthalmic lens (20) as a function of the positions of said centering marks (24 - 27) on said raw image, and then shaping said ophthalmic lens (20);
wherein step c) is performed as a function of the information decoded in step b).

2. A method according to claim 1 implemented by a device for preparing lenses that includes a centering appliance (200) fitted with acquisition means arranged to acquire raw images of ophthalmic lenses (20) on which there appear images of centering marks (24 - 27) marked on said ophthalmic lenses (20), wherein, in step a), the raw image is acquired by the acquisition means of said centering appliance (200).

3. A method according to claim 2, wherein, in step a), the image of the memory mark (28) and the images of the centering marks (24 - 27) marked on the ophthalmic lens (20) are acquired simultaneously, forming a common overall image.

4. A method according to any one of claims 2 to 3, wherein said centering appliance (200) includes image processor means for identifying the positions of said centering marks (24 - 27) on said ophthalmic lens (20), and in step b), the image of the memory mark (28) is processed by the image processor means of said centering appliance (200).

5. A method according to any one of claims 1 to 4, wherein said code is a two-dimensional code storing at least four distinct items of information.

6. A method according to claim 5, wherein said items of information relate to the shapes of the front and rear faces of the ophthalmic lens (20), to the thickness of the ophthalmic lens (20), and to the relative orientations of the front and rear faces of the ophthalmic lens (20).

7. A method according to any one of claims 1 to 6, wherein said code stores a value of an optical characteristic of the ophthalmic lens (20), and a step of verifying the ophthalmic lens (20) is provided comprising the following actions:
• acquiring a value of said optical characteristic by performing a measurement on the ophthalmic lens (20) or by reading in a registry including order data for the ophthalmic lens;
• comparing said acquired value with the value stored in said code; and
• verifying that the values are consistent.

8. A method according to any one of claims 1 to 7, where said code stores information relating to a map of the thickness of the ophthalmic lens (20) and a step of verifying the ophthalmic lens (20) is provided comprising the following actions:
• acquiring the shape of an outline (11) to which the ophthalmic lens is to be shaped;
• positioning the acquired outline (11) on the ophthalmic lens (20) ;
• determining the thickness of the ophthalmic lens (20) at a plurality of points around the outline (11) while taking account of the information decoded in step b); and
• verifying that, at each of said points, the ophthalmic lens (20) presents thickness that is greater than a predetermined minimum threshold.

9. A method according to any one of claims 1 to 8, wherein said code stores information relating to a map of the optical faces (22) of the ophthalmic lens (20), and a step is provided of viewing the ophthalmic lens (20), said step comprising the following actions:
• acquiring the shape of an outline (11) to which the ophthalmic lens is to be shaped;
• positioning the acquired outline (11) on the ophthalmic lens (20) ;
• using the information decoded in step b) to calculate the three-dimensional shape that the ophthalmic lens (20) will present at the end of step c); and
• displaying said three-dimensional shape on an inspection screen (205) visible to the user.

10. A method according to any one of claims 1 to 9, wherein said code stores information relating to the shape of a pattern of centering marks (24 - 27) marked on the ophthalmic lens (20), and a step of centering the ophthalmic lens (20) is provided during which the position of the pattern of centering marks (24 - 27) on an image of the ophthalmic lens (20) is detected with the help of the information decoded in step b).

11. A method according to any one of claims 1 to 10, wherein said code stores information relating to a mechanical characteristic of the ophthalmic lens, and in step c) the ophthalmic lens is shaped with a tool and/or in application of machining parameters that are selected as a function of the information decoded in step b).

12. A method according to any one of claims 1 to 11, wherein said information decoded in step b) includes at least one of the following characteristics:
• an optical category to which the lens in question belongs selected from the following categories: single vision, multifocal, and progressive;
• a mechanical category to which the lens in question belongs selected from at least the following categories: fragile and strong;
• a material;
• a refractive index;
• a pattern of centering marks;
• a reference for a lens type;
• a camber;
• a diameter before shaping;
• a surface treatment;
• a map of the shape of at least one of the optical faces;
• a thickness or a thickness map;
• a spherical optical power;
• a cylindrical optical power;
• a prismatic optical power;
• a cylinder axis orientation;
• an addition;
• a destination in terms of right or left position on the eyeglass frame;
• an ability to withstand crazing; and
• commercial information.

13. An appliance (200) comprising:
• support means (202) for supporting an ophthalmic lens (20), the ophthalmic lens presenting on one and/or the other of its optical faces (22) centering marks (24 - 27), and a memory mark (28) forming a one- or two-dimensional code that stores in digital form at least one item of information relating to a mechanical, geometrical, or optical characteristic of the ophthalmic lens (20);
• means for capturing a raw image of said ophthalmic lens (20);
• image processor means arranged to process the raw image of the lens as captured by said capture means in order to identify the positions of said centering marks (24 - 27) on said ophthalmic lens (20) and to decode the information contained in the memory mark code (28), and
• centering means adapted to center said ophthalmic lens (20) as a function of the identified positions of its centering marks (24 - 27).
